Europäisches Patentamt

European Patent Office

Office européen des brevets

(19)

(11) **EP 0 818 143 B1**

(12) **FASCICULE DE BREVET EUROPEEN**

(45) Date de publication et mention
de la délivrance du brevet:
**19.09.2001 Bulletin 2001/38**

(51) Int Cl.7: **A01N 37/12**
// (A01N37/12, 37:40)

(21) Numéro de dépôt: **97401597.6**

(22) Date de dépôt: **04.07.1997**

(54) **Composition bactéricide de qualité alimentaire et procédé pour sa mise en oeuvre**

Bakterizide Zusammensetzung in Lebensmittelqualität und Verfahren zu ihrer Verwendung

Food grade bactericidal composition and process for its use

(84) Etats contractants désignés:
**AT BE DE ES NL**

(30) Priorité: **08.07.1996 FR 9608484**

(43) Date de publication de la demande:
**14.01.1998 Bulletin 1998/03**

(73) Titulaire: **PENNGAR S.A.**
**72500 Vaas (FR)**

(72) Inventeurs:
• **Schapira, Joseph**
**75015 Paris (FR)**
• **Rocquet, Philippe**
**91000 Evry (FR)**
• **Vincent, Jacques**
**78750 Mareil Marly (FR)**
• **Geneix, Catherine**
**92000 Nanterre (FR)**

(74) Mandataire: **Chameroy, Claude**
**c/o Cabinet Malémont**
**42, avenue du Président Wilson**
**75116 Paris (FR)**

(56) Documents cités:
**EP-A- 0 243 145          DE-A- 2 755 052**

• **CHEMICAL ABSTRACTS, vol. 116, no. 21, 1992 Columbus, Ohio, US; abstract no. 209290, T.J. MCCARTHY ET AL.: "The antimicrobial action of zinc ion/antioxidant combinations." XP002028141 & J. CLIN. PHARM. THER., vol. 17, no. 1, 1992, pages 51-54,**
• **CHEMICAL ABSTRACTS, vol. 98, no. 5, 31 janvier 1983 Columbus, Ohio, US; abstract no. 31348, J.J. ZEELIE ET AL.: "The antimicrobial activity of phenolic antioxidants in aqueous solution." XP002028142 & COSMET. TOILETRIES, vol. 97, no. 11, - 1982 pages 61-62,64,**
• **CHEMICAL ABSTRACTS, vol. 88, no. 7, 13 février 1978 Columbus, Ohio, US; abstract no. 45560, A.L. LING ET AL.: "Antimicrobial avtivity of selected antioxidants." XP002028143 & J. FOOD. PROT., vol. 40, no. 8, 1977, pages 520-522,**

EP 0 818 143 B1

**Description**

L'invention a pour objet une composition bactéricide de qualité alimentaire du genre de celles qui sont propres à assurer tant la prophylaxie de la mammite subclinique chez les ruminants, notamment chez la vache laitière que les opérations de désinfection d'équipements et d'instruments dans les domaines hospitaliers et agro-alimentaires, notamment dans l'industrie de la viande, dans l'industrie des boissons et à la ferme.

Elle vise également un procédé de désinfection mettant en oeuvre la susdite composition bactéricide.

On connaît déjà des compositions bactéricides de qualité alimentaire du genre en question; ces compositions bactéricides sont à base de monoester d'acide gras saturé en $C_{10}$ ou $C_{12}$ et de glycérol et d'acide éthylène-diamine-tétracétique ou EDTA.

Ces compositions bactéricides connues donnent généralement satisfaction.

Il n'en est pas moins vrai que l'utilisateur est toujours à la recherche de compositions bactéricides plus efficaces, c'est-à-dire donnant le même résultat à des doses plus faibles.

C'est à la mise au point d'une telle composition bactéricide que la Société Demanderesse s'est attachée.

Et elle a eu le mérite d'avoir trouvé, à l'issue de recherches approfondies, que, de façon totalement inattendue et surprenante, ce but était atteint en remplaçant dans les susdites compositions connues l'EDTA par le gallate de n-propyle.

Il s'ensuit que la composition bactéricide de qualité alimentaire conforme à l'invention, à base d'un monoester d'acide gras saturé en $C_{10}$ ou $C_{12}$ et de glycérol et avantageusement d'un ester alcoyle de l'acide parahydroxybenzoïque, est caractérisée par le fait qu'elle comprend une quantité efficace de gallate de n-propyle.

Selon un mode de réalisation avantageux, la susdite composition bactéricide comporte:

- de 5 à 70% et, de préférence, de 8 à 60% de gallate de n-propyle,
- de 0,05 à 50% et, de préférence, de 0,1 à 47% d'un monoester d'acide gras saturé en $C_{10}$ ou $C_{12}$ et de glycérol, et
- avantageusement de 5 à 95%, de préférence de 7 à 91% d'un ester alcoyle de l'acide parahydroxybenzoïque et, plus particulièrement, le parahydroxybenzoate de méthyle.

Le procédé de désinfection conforme à l'invention est caractérisé par le fait que la composition bactéricide conforme à l'invention est mise en oeuvre à la température ambiante, sur les surfaces des instruments ou installations à désinfecter ou sur le pis des ruminants, notamment de la vache laitière avant ou après la traite, par trempage ou pulvérisation soit sous la forme d'une solution glycolique, avantageusement dans le propylèneglycol, soit sous la forme d'une solution hydro-alcoolique, avantageusement celle décrite dans les documents FR-A-94 08180 et EP-0 689 768 au nom de la Société Demanderesse, soit encore sous la forme d'une dispersion aqueuse stable du genre de celles désignées par le terme de métier "flow", les principes actifs étant peu solubles dans l'eau.

Elle sera encore mieux comprise à l'aide de la description qui suit et des exemples non limitatifs relatifs à des modes de réalisation avantageux.

Le monoglycéride en position 1 de l'acide laurique, dénommé monolaurine ou lauricidine, est autorisé dans la Communauté Européenne comme additif alimentaire à propriétés émulsifiantes (désigné par E 471) et est connu comme ayant des propriétés bactéricides sur gram+ uniquement ("Antimicrobial Agents and Chemotherapy", July 1972, vol 2 n°1 p. 23-28).

Il en est de même du monoglycéride en position 1 de l'acide décanoïque, dénommé monocaprine.

Dans les compositions bactéricides conformes à l'invention, la monolaurine est préférée.

Dans les compositions bactéricides connues, le défaut d'activité des monolaurine et monocaprine sur gram- est compensé par l'adjonction d'acide éthylène-diamine-tétracétique ou EDTA ("J. Food Saf" 1994, 14(2) 131-151).

Les esters d'alkyle (méthyle, éthyle, propyle) de l'acide parahydroxybenzoïque connus sous les noms commerciaux SOLBROL, PARABEN ou PARASEPT qui sont autorisés comme conservateurs en cosmétique, leurs références au Journal Officiel des Communautés Européennes en tant qu'additifs alimentaires étant E 218, E 214 et E 216, ont déjà été utilisés pour améliorer l'activité bactéricide sur gram- de la nisine (document US-A-5 135 910).

Le gallate de n-propyle est un additif alimentaire autorisé comme antioxydant des huiles et graisses alimentaires; sa référence au Journal Officiel des Communautés Européennes est E 310; il présente des propriétés antimicrobiennes (cf. Chemical Abstracts, vol.88, n°7, 13 février 1978, abrégé n° 88:45560r et Chemical Abstracts, vol.98, n°5, 31 janvier 1983, abrégé n° 98:31348x).

Mais il était tout à fait surprenant et inattendu de trouver que les compositions bactéricides du genre en question dans lesquelles il est utilisé à la place de l'EDTA, sont plus efficaces que ces dernières et peuvent donc être utilisées à des doses plus faibles pour une même efficacité.

Pour montrer l'activité bactéricide du gallate de n-propyle et l'efficacité des compositions à base de ce produit à la place de l'EDTA, la Société Demanderesse a effectué les essais rappelés ci-après.

Ces essais comprennent la détermination de la concentration minimum inhibitrice ou CMI, c'est-à-dire la concentration de substance pour laquelle aucune croissance de microorganisme n'est observée après inoculation, et celle de la concentration minimum bactéricide ou CMB, c'est-à-dire la concentration de substance pour laquelle on enregistre une destruction significative de l'ordre de 5 log d'une population de microorganismes dans un temps donné.

L'avantage apporté par l'utilisation dans les compositions du genre en question du gallate de n-propyle à la place de l'EDTA a été démontré en déterminant dans des essais comparatifs la CMI et la CMB pour les deux compositions.

Dans un premier temps, on a déterminé la CMI des produits suivants:

■ Monolaurate de glycérol (par exemple celui commercialisé sous la marque MONOMULS 90 L 12 PULVER par la Société HENKEL)

■ Monocaprate de glycérol (par exemple celui de qualité analytique commercialisé sous la marque SIGMA)

■ Parahydroxybenzoate de méthyle (par exemple celui commercialisé sous la marque SOLBROL M par la Société Bayer)

■ Sel disodique de l'acide éthylène-diamine-tétracétique (par exemple celui commercialisé sous la marque DISSOLVINE NA-2 d'Akzo Nobel Chemie)

■ Gallate de n-propyle pur pour usage alimentaire (CFPI)

■ Acide citrique monohydraté pur pour analyse

sur les microorganismes suivants (Collection de microorganismes de l'Institut Pasteur ou CIP et Collection de l'INRA):

| | | |
|---|---|---|
| • *Escherichia coli* | CIP 54127 (Gram-) | ⎫ |
| • *Staphylococcus aureus* | CIP 53154 (Gram+) | ⎬ Souches de |
| • *Enterococcus hirae* | CIP 5855 (Gram+) | ⎬ collection |
| • *Pseudomonas aeruginosa* | CIP A 22 (Gram-) | ⎭ |
| • *Escherichia coli* | INRA D6 11132 | ⎫ Souches |
| • *Staphylococcus aureus* | INRA D4 10759 | ⎭ sauvages |

On prépare d'abord les solutions des composés à tester.

Les monoesters, à savoir la monolaurine et la monocaprine, l'ester méthylique de l'acide parahydroxybenzoïque et le gallate de n-propyle sont préparés en solution dans l'alcool éthylique à 60°C ou 70°C selon la solubilité du composé. Le sel disodique de l'EDTA est préparé en solution dans l'eau distillée. Toutes ces solutions sont stérilisées par filtration sur membrane 0,22 $\mu$m (MILLEX GS, MILLIPORE) puis conservées au froid et utilisées dans un délai d'un mois.

Ensuite et en vue de la détermination de la CMI des composés à tester, on mélange, dans un tube à essai, les solutions de ces dérivés avec du bouillon de culture en respectant les proportions suivantes:

- 4,7 ml de bouillon trypticase soja (BACTO TSB, Difco)
- 0,2 ml de solution du composé testé,

ce grâce à quoi la concentration du composé à tester dans le mélange soumis aux tests est égale à 1/25 de la concentration dudit composé dans la solution de départ.

Pour constituer une gamme de concentrations du composé à tester, on fait varier les proportions respectives de bouillon et de solution de composés.

Dans les tubes témoins, on mélange:

- 4,7 ml de bouillon trypticase soja et
- 0,2 ml du diluant du composé étudié (eau distillée ou éthanol à 60 ou 70°C).

La série de tubes est ensuite ensemencée par addition de 0,1 ml de la dilution $10^{-2}$ d'un bouillon de culture de 24 heures à 37°C de la bactérie choisie, ce qui représente un ensemencement final de 5 x $10^5$ bact/ml environ.

Les tubes sont placés à incuber à 37°C et la croissance est notée, comparativement aux tubes témoins, après 4 à 5 jours d'incubation.

Le CMI correspond à la dose à partir de laquelle est observée l'absence de pousse.

Les résultats obtenus sont réunis dans le tableau I ci-après.

## TABLEAU I

### Résultats des CMI des composés testés seuls

(les valeurs sont exprimées en mg/ml du mélange réactionnel)

| | Monolaurine | Monocaprine | EDTA sel disodique | Gallate de n-propyle | Acide citrique | PARABEN méthyle |
|---|---|---|---|---|---|---|
| S. aureus (gram+) | 0,0075 | 0,05 | 0,25 | > 0,25 | > 0,25 | 2,5 |
| E. Hirae (gram+) | 0,1/0,25 | 0,25 | 0,25 | > 0,25 | > 0,25 | 5 |
| E. coli (gram-) | > 1 | > 1 | 0,5 | > 0,25 | > 0,25 | 1 |
| P. aeruginosa (gram-) | > 1 | > 0,25 | > 2 | > 0,25 | > 0,25 | 2,5 |
| Insolubilité à la concentration de (dans le mélange réactionnel) | 0,1 | 0,5 | RAS | 0,5 | Variation de pH au-delà de 0,25 mg/l | 2,5 |

Il apparaît à l'examen des résultats réunis dans ce tableau que la monolaurine et la monocaprine sont actives sur gram+ mais pas sur gram-; l'EDTA est actif sur gram+ et moins bon sur gram-; le gallate de n-propyle et le PARABEN méthyle ont une certaine activité à la fois sur gram+ et gram-.

Dans un deuxième temps, on a déterminé la CMI, en procédant de la même façon qu'indiqué plus haut, des mélanges binaires du gallate de n-propyle avec la monolaurine et la monocaprine.

Dans ces mélanges, on a fait varier:

- la concentration de monolaurine de 0,0031 à 0,1 mg/ml du mélange réactionnel,
- la concentration de monocaprine de 0,0078 à 0,25 mg/ml du mélange réactionnel, et
- la concentration de gallate de n-propyle de 0,0039 à 0,25 mg/ml du mélange réactionnel.

Pour les mélanges à base de monolaurine et de gallate de n-propyle, les CMI sur *E. Coli, P. aeruginosa* et *S. aureus,* déterminées de la même manière qu'avec les deux composés actifs utilisés seuls, sont réunies dans le tableau II ci-après.

TABLEAU II

| (les valeurs sont exprimées en mg/ml du mélange réactionnel) | | |
|---|---|---|
| Microorganisme | Monolaurine | Gallate de n-propyle |
| *E. coli* | 0,1 | 0,25 |
| *P. aeruginosa* | 0,1 | 0,125 |
| *S. aureus* | 0,003 | 0,25 |
|  | 0,1 | 0,0625 |

Pour les mélanges à base de monocaprine et de gallate de n-propyle, les CMI sur *E. Coli, P. aeruginosa, S. aureus,* et *E. hirae*, déterminées de la même manière qu'avec les deux composés actifs utilisés seuls, réunies dans le tableau III ci-après.

TABLEAU III

| (les valeurs sont exprimées en mg/ml du mélange réactionnel) | | |
|---|---|---|
| Microorganisme | Monocaprine | Gallate de n-propyle |
| *E. coli* | 0,125 | 0,25 |
| *P. aeruginosa* | 0,25 | 0,25 |
| *S. aureus* | 0,03 | 0,025 |
| *E. hirae* | 0,25 | 0,0039 |

En comparant ces résultats avec ceux réunis dans le tableau I, on constate que, dans tous les cas, il y a synergie.

Dans un troisième temps, on a déterminé la CMI des mélanges ternaires

"monocaprine - EDTA sel disodique - PARABEN méthyle" et
"monocaprine - gallate de n-propyle - PARABEN méthyle".

Dans le cas du mélange à base de EDTA, on a fixé la concentration en EDTA dans tous les essais à la valeur de 0,25 mg/ml du mélange réactionnel et on a fait varier:

- la concentration en monocaprine de 0,0078 à 0,25 mg/ml du mélange réactionnel, et
- la concentration en PARABEN méthyle de 0,039 à 2,5 mg/ml du mélange réactionnel.

En procédant comme indiqué plus haut en rapport avec les substances actives prises isolément, on a trouvé que, sur les microorganismes ci-après, la CMI pour les mélanges correspond aux valeurs réunies dans le tableau IV.

TABLEAU IV

| (les valeurs sont exprimées en mg/ml du mélange réactionnel) | | | |
|---|---|---|---|
| Microorganisme | EDTA | Monocaprine | PARABEN méthyle |
| E. Coli | 0,25 | 0,015 | 0,15 |
| | 0,25 | 0,125 | 0,078 |
| | 0,25 | 0,25 | 0,039 |
| E. Coli INRA | 0,25 | 0,0078 | 2,5 |
| | 0,25 | 0,0625 | 1,25 |
| | 0,25 | 0,125 | 0,625 |
| | 0,25 | 0,25 | 0,078 |
| S. aureus | 0,25 | 0,0625 | 0,039 |
| | 0,25 | 0,031 | 0,31 |
| | 0,25 | 0,0078 | 1,25 |
| S. aureus INRA | 0,25 | 0,0078 | 0,039 |

En comparant ces résultats à ceux des tableaux précédents, on constate qu'il y a synergie sur les trois premiers microorganismes.

Dans le cas du mélange à base de gallate de n-propyle, la dose de ce dernier est fixée à 0,25 mg/ml alors que la dose de monocaprine varie de 0,0078 à 0,25 et celle de PARABEN méthyle de 0,039 à 2,5.

En procédant comme indiqué plus haut en rapport avec les substances actives prises isolément, on a trouvé que, sur les microorganismes ci-après, la CMI pour les mélanges correspond aux valeurs réunies dans le tableau V.

TABLEAU V

| (les valeurs sont exprimées en mg/ml du mélange réactionnel) | | | |
|---|---|---|---|
| Microorganisme | Gallate de n-propyle | Monocaprine | PARABEN méthyle |
| E. Coli | 0,25 | 0,0078 | 0,156 |
| | 0,25 | 0,0156 | 0,078 |
| E. Coli INRA | 0,25 | 0,015 | 0,625 |
| | 0,25 | 0,0625 | 0,32 |
| P. aeruginosa | 0,25 | 0,0625 | 0,625 |
| | 0,25 | 0,125 | 0,15 |
| S. aureus | 0,25 | 0,0078 | 0,039 |
| S. aureus INRA | 0,25 | 0,0078 | 0,039 |
| E. hirae | 0,25 | 0,0625 | 2,5 |
| | 0,25 | 0,125 | 1,25 |
| | 0,25 | 0,25 | 0,039 |

En comparant ces résultats à ceux des tableaux précédents, on constate qu'il y a synergie sur les quatre premiers et le sixième microorganismes.

Les valeurs contenues dans le tableau V sont utilisées pour déterminer les domaines de concentration des trois constituants des mélanges conformes à l'invention.

A partir des valeurs réunies dans les tableaux IV et V, on détermine une compositions minimale pour les deux mélanges.

Pour le mélange EDTA/monocaprine/PARABEN méthyle, cette composition minimale est:

| | |
|---|---|
| EDTA | 0,25 mg/ml |
| Monocaprine | 0,0625 mg/ml |
| PARABEN méthyle | 1,25 mg/ml. |

Pour le mélange gallate de n-propyle/monocaprine/PARABEN méthyle, cette composition minimale est:

| | |
|---|---|
| Gallate de n-propyle | 0,25 mg/ml |
| Monocaprine | 0,0625 mg/ml |
| PARABEN méthyle | 0,625 mg/ml. |

De la comparaison de ces deux compositions, il apparaît que, pour une même efficacité, la dose du mélange à base de gallate de n-propyle est nettement inférieure à celle du mélange à base de EDTA.

Ce résultat est retrouvé pour les autres compositions minimales qui résultent des tableaux IV et V.

On a également déterminé les concentrations minimales bactéricides de deux mélanges à base de monolaurine et respectivement d'EDTA et de gallate de n-propyle; ces mélanges contiennent également du PARABEN méthyle.

Dans les essais correspondants, on a choisi les proportions des constituants en fonction des résultats obtenus précédemment en rapport avec la détermination de la CMI.

Les souches utilisées sont les suivantes:

```
▪  Escherichia coli           CIP 54127  (Gram-) ⎫
▪  Staphylococcus aureus       CIP 53154  (Gram+) ⎬  Souches de
▪  Enterococcus hirae          CIP  5855  (Gram+) ⎨  collection
▪  Pseudomonas aeruginosa      CIP  A 22  (Gram-) ⎭

▪  Streptococcus dysgalactiae:  INRA D5 50311  ⎫  Souches
▪  Streptococcus uberis:        INRA D5 50726  ⎬  sauvages
▪  Streptococcus agalactiae:    INRA D5 50119  ⎭
```

Les mélanges réactionnels à base de bouillon trypticase soja et de solutions des composés à étudier sont préparés de la même façon que pour la détermination des CMI.

Les mélanges sont inoculés par ajout de 100 µl d'un bouillon de culture de 24 heures de la bactérie choisie, et un chronomètre est déclenché au moment de l'addition.

Après des temps de contact de 1 heure, 6 heures ou 24 heures aux températures de 20-23°C, 100 µl de chaque mélange sont prélevés et inoculés sur une boîte de Pétri dans une gélose nutritive additionnée d'un agent neutralisant (par exemple celle commercialisée sous l'appellation COUNT TACT AGAR par la Société Biokar).

Après une incubation de 48 heures à 72 heures à 37°C, les germes survivants sont dénombrés et la "chute de log" est déterminée par comparaison avec la numération effectuée sur des tubes témoins ne comportant pas de composé bactéricide.

La concentration en microorganismes qui est de l'ordre de $10^5$ à $10^7$ est exprimée en logarithmes ("log") décimaux.

Et on désigne par "chute de log" la diminution de cette valeur après action du mélange.

Les deux mélanges testés sont:

- d'une part, un mélange A à base d'EDTA présentant la composition suivante:

| | |
|---|---|
| Monolaurine | 0,1 mg/ml du mélange |
| EDTA disodique | 1 mg/ml du mélange |
| PARABEN méthyle | 1,25 mg/ml du mélange |

- d'autre part, un mélange B à base de gallate de n-propyle et présentant la composition suivante:

| | |
|---|---|
| Monolaurine | 0,1 mg/ml du mélange |
| Gallate de n-propyle | 0,25 mg/ml du mélange |
| PARABEN méthyle | 1,25 mg/ml du mélange. |

On a réuni dans le tableau VI les résultats obtenus avec les mélanges A et B.

## TABLEAU VI

| (log) Population mise en test | Mélange A chute de log à | | | Mélange B chute de log à | | |
|---|---|---|---|---|---|---|
| | 1 heure | 6 heures | 24 heures | 1 heure | 6 heures | 24 heures |
| **E. coli** 5,74 | 3,29 | 4,74 | 5,74 | 1,48 | 4,74 | 5,74 |
| **P. aeruginosa** 5,08 | 2,60 | 5,08 | 5,08 | 1,80 | 5,08 | 5,08 |
| **S. aureus** 6,56 | 3,58 | 6,56 | 6,56 | 3,71 | 5,08 | 6,56 |
| **E. hirae** 6,59 | 0,31 | 0,5 | 1,43 | 0,25 | 0,2 | 0,52 |
| **E. coli INRA** 6,26 | < 2,56 | < 2,56 | < 2,56 | < 2,56 | < 2,56 | 6,26 |
| **S. aureus INRA** 6,38 | < 2,68 | < 2,68 | < 2,68 | < 2,68 | 2,78 | 5,38 |
| **St. uberis** 6,67 | < 3,97 | 6,67 | NT | 6,67 | 6,67 | NT |
| **St. dysgalactiae** 6,13 | 5,1 | 6,13 | NT | 6,13 | 6,13 | NT |
| **St. agalactiae** 6,23 | 4,78 | 6,23 | NT | 6,23 | 6,23 | NT |

A l'examen des résultats réunis dans le tableau VI, il apparaît que, pour une dose globale beaucoup plus faible (1,60 mg/ml au lieu de 2,35 mg/ml), le mélange conforme à l'invention est aussi efficace que celui de l'art antérieur.

Les mélanges conformes à l'invention se présentent sous la forme de poudre directement utilisable en l'état.

Pour la mise en oeuvre de ces mélanges, on les présente sous forme de compositions liquides utilisables en l'état ou diluées avant l'emploi; le taux de dilution est fonction du niveau de performances recherché.

Ces compositions liquides sont mises en oeuvre par pulvérisation pour désinfecter des surfaces, par circulation pour désinfecter des circuits et par trempage pour désinfecter des instruments.

Dans l'application particulière qui constitue la prévention de la mammite chez la vache laitière, ces compositions peuvent être appliquées par trempage du pis ou par pulvérisation avant et/ou après la traite.

Les additifs de formulation sont choisis parmi ceux qui sont reconnus comme additifs alimentaires dans la Communauté Européenne et comme auxiliaires technologiques en France.

Ces additifs comprennent des diluants, notamment les alcools choisis dans le groupe comprenant les alcools éthylique, isopropylique, n-propylique, connus comme auxiliaires technologiques, et les glycols comme le propylèneglycol qui est un diluant pour colorants ou agents antioxygènes alimentaires; il est possible d'ajoindre à ces diluants de l'eau déminéralisée en quantité compatible avec le maintien en solution des principes actifs.

Afin d'améliorer les propriétés mouillantes des compositions liquides, on peut avoir recours à des agents tensio-actifs comme par exemple le monolaurate de sorbitan à 20 moles d'oxyde d'éthylène (ou polysorbate 20), à savoir l'additif E 432, ou un oxyde d'une diméthylalkylamine en $C_{12}$ ou $C_{14}$, ou encore l'acide dodécylbenzènesulfonique, ces produits étant des tensio-actifs utilisés en cosmétique et dans les compositions de nettoyage des surfaces au contact des denrées alimentaires.

Pour éviter la formation de colorations indésirables par suite de la réaction des esters de l'acide gallique avec le fer, on peut avoir recours à des agents chélatants du groupe comprenant les gluconates, les citrates et l'EDTA.

En vue de conférer aux susdites compositions liquides une consistance suffisante pour qu'elles adhèrent au support traité, on peut utiliser des éthers de cellulose comme l'hydroxypropylcellulose, à savoir l'additif alimentaire E 463 ou encore la gomme Xanthane, à savoir l'additif alimentaire E 415.

Dans le cas d'une application sur le pis des vaches avant et/ou après la traite pour prévenir la mammite, on peut envisager l'incorporation dans les compositions liquides d'un agent émollient comme le propylèneglycol et/ou de glycérine (à savoir l'additif alimentaire E 422) et/ou d'un agent filmogène du type polyvinylpyrrolidone (PVP), autorisé en France comme auxiliaire technologique dans la fabrication de la bière.

Enfin, des colorants et des parfums alimentaires pourront être éventuellement utilisés.

## EXEMPLE 1

On prépare un mélange bactéricide ayant la composition suivante:

| Monolaurine | 6 % |
|---|---|
| PARABEN méthyle | 78,8 % |
| Gallate de n-propyle | 15,2 % |
| | 100 % |

## EXEMPLE 2

On prépare une composition bactéricide ayant la composition suivante et destinée au trempage du pis de la vache laitière avant et/ou après la traite:

| | |
|---|---|
| n-propanol | 12 % |
| Propylèneglycol | 20 % |
| EDTA sel disodique | 0,1 % |
| Polysorbate 20 (par exemple celui commercialisé sous la marque MONTANOX 20 par la Société Seppic | 2 % |
| Mélange bactéricide selon l'exemple 1 | 0,3 % |
| Eau déminéralisée + parfum + colorant        qsp | 100 % |

La composition présente un aspect liquide limpide.

## EXEMPLE 3

On prépare une composition bactéricide ayant la composition suivante et destinée au trempage du pis de la vache laitière après la traite:

| Isopropanol | 12 % |
| Glycérine | 5 % |
| Hydroxyéthylcellulose | 0,3 % |
| EDTA sel disodique | 0,1 % |
| Mélange bactéricide selon l'exemple 1 | 0,35% |
| Oxyde d'amine (par exemple celui commercialisé sous la marque AROMOX MCD-W par la Société Akzo Nobel Chimie) | 1 % |
| Eau déminéralisée + parfum + colorant        qsp | 100 % |

La composition a un aspect liquide limpide épais.

## EXEMPLE 4

On prépare une composition bactéricide ayant la composition suivante et destinée au trempage du pis de la vache laitière après la traite:

| Isopropanol | 12 % |
| Glycérine | 5 % |
| Gomme xanthane (par exemple celle commercialisée sous la marque RHODOPOL 23 par la Société Rhône-Poulenc) | 0,5 % |
| EDTA sel disodique | 0,1 % |
| Mélange bactéricide selon l'exemple 1 | 0,35% |
| Polysorbate 20 | 2 % |
| PVP | 0,5 % |
| Eau déminéralisée + parfum + colorant        qsp | 100 % |

La composition présente un aspect liquide limpide épais.

## EXEMPLE 5

On prépare une composition bactéricide ayant la composition suivante:

| Monolaurine | 0,13% |
| Gallate de n-propyle | 0,33% |
| PARABEN méthyle | 1,67% |
| Propylèneglycol        qsp | 100 % |

La composition présente un aspect liquide limpide.

## EXEMPLE 6

On prépare une composition bactéricide ayant la composition suivante:

| Monolaurine | 0,2 % |
| PARABEN méthyle | 2,6 % |
| Gallate de n-propyle | 0,5 % |
| n-propanol        qsp | 100 % |

La composition présente un aspect liquide limpide.

Une autre manière de formuler la composition bactéricide conforme à l'invention consiste à appliquer la technologie des dispersions aqueuses stables pendant au moins un an; ces dispersions stables sont couramment utilisées pour formuler des pesticides et on les désigne par le terme technique de "flow". Les principes actifs solides sont broyés en milieu aqueux dans un broyeur à billes de verre ou de stéatite à des dimensions d'environ 2 microns.

On ajoute de la gamme xanthane comme agent rhéologique et de suspension, des agents mouillants non ioniques tels que le nonylphénol 10 OE et des agents dispersants tels que celui commercialisé sous la marque SOPROPHOR FL par Rhône-Poulenc, qui est un phosphate de tristyrylphénol à 16 OE sous la forme du sel de triéthanolamine.

La composition ainsi obtenue peut être utilisée telle quelle ou après dilution avec de l'eau, le taux de dilution étant fonction de l'efficacité recherchée.

Une telle composition est illustrée par l'exemple 7.

## EXEMPLE 7

On prépare une composition bactéricide ayant la composition suivante:

| | |
|---|---|
| Monolaurine | 4 % |
| Gallate de n-propyle | 10 % |
| PARABEN méthyle | 4 % |
| Propylèneglycol | 5 % |
| Dispersant (par exemple celui commercialisé sous la marque SOPROPHOR FL par la Société Rhône-Poulenc) | 2 % |
| Nonylphénol 10 OE | 0,5 % |
| Gomme xanthane | 0,5 % |
| n-propanol | 0,5 % |
| Polydiméthylsiloxane | 0,01% |
| Eau déminéralisée          qsp | 100 % |

La composition se présente sous la forme d'un liquide blanc laiteux stable.

Toujours en référence aux technologies de formulation des pesticides, la composition solide objet de l'invention peut être présentée sous la forme de poudre mouillable; une poudre mouillable est une poudre qui donne au contact de l'eau une dispersion stable.

Pour ce faire, on broie à sec, jusqu'à une granulométrie d'environ 40 microns, la composition solide en présence d'une charge du genre silicoaluminate, d'un agent mouillant du type alkylarylsulfonate alcalin et d'un agent dispersant du type lignosulfonate de soude.

Une telle composition est illustrée par l'exemple 8.

## EXEMPLE 8

On prépare une poudre mouillable à base du mélange bactéricide conforme à l'invention.

La composition de cette poudre mouillable est comme suit:

| | |
|---|---|
| Monolaurine | 4 % |
| Gallate de n-propyle | 10 % |
| PARABEN méthyle | 4 % |
| Alkylarylsulfonate de soude (par exemple celui commercialisé sous la marque GALORYL MT 703 par la Demanderesse) | 1,5 % |
| Lignosulfonate de soude | 7 % |
| Silicoaluminate          qsp | 100 % |

La poudre mouillable en question présente un aspect de poudre fine de couleur crème.

**Revendications**

**1.** Composition bactéricide de qualité alimentaire à base d'un monoester d'acide gras saturé en $C_{10}$ ou $C_{12}$ et de glycérol et avantageusement d'un ester alcoyle de l'acide parahydroxybenzoïque, **caractérisée par** le fait qu'elle comprend une quantité efficace de gallate de n-propyle.

**2.** Composition bactéricide de qualité alimentaire selon la revendication 1, **caractérisée par** le fait qu'elle comporte:

- de 5 à 70% et, de préférence, de 8 à 60% de gallate de n-propyle,
- de 0,05 à 50% et, de préférence, de 0,1 à 47% d'un monoester d'acide gras saturé en $C_{10}$ ou $C_{12}$ et de glycérol, et
- avantageusement de 5 à 95%, de préférence de 7 à 91% d'un ester alcoyle de l'acide parahydroxybenzoïque et, plus particulièrement, le parahydroxybenzoate de méthyle.

3. Composition bactéricide de qualité alimentaire selon l'une des revendications 1 et 2, **caractérisée par** le fait que le monoester d'acide gras saturé en $C_{10}$ ou $C_{12}$ et de glycérol est choisi dans le groupe comprenant la monocaprine et la monolaurine.

4. Composition bactéricide de qualité alimentaire selon l'une des revendications 1 à 3, **caractérisée par** le fait que l'ester de l'acide parahydroxybenzoïque est l'ester éthylique ou l'ester n-propylique.

5. Composition bactéricide de qualité alimentaire selon l'une des revendications 1 à 4, **caractérisée par** le fait que ses constituants sont formulés sous la forme d'une solution hydro-alcoolique eau-éthanol, eau-isopropanol ou eau-n-propanol.

6. Composition bactéricide de qualité alimentaire selon l'une des revendications 1 à 4, **caractérisée par** le fait que ses constituants sont formulés sous la forme d'une solution glycolique, de préférence dans le propylèneglycol.

7. Utilisation de la composition bactéricide selon l'une des revendications 1 à 6, pour la désinfection des surfaces, des circuits et des instruments dans l'industrie laitière, dans l'industrie de la viande, dans l'industrie des boissons et à la ferme.

8. Utilisation de la composition bactéricide selon l'une des revendications 1 à 6, pour la prévention de la mammite subclinique chez les ruminants, notamment chez la vache par application sur le pis avant et/ou après la traite.

9. Procédé de désinfection **caractérisé par** le fait que la composition bactéricide de qualité alimentaire selon l'une des revendications 1 à 6 est mise en oeuvre à la température ambiante, sur les surfaces des instruments ou installations à désinfecter ou sur le pis des ruminants, notamment de la vache laitière avant ou après la traite, par trempage ou pulvérisation.

**Patentansprüche**

1. Keimtötende Zusammensetzung lebensmitteltechnischer Art auf der Grundlage einer Monoesterfettsäure, gesättigt in $C_{10}$ oder $C_{12}$ und durch Glyzerol, und vorzugsweise auf der Grundlage eines Alkylesters aus Parahydroxybenzolsäure, **dadurch gekennzeichnet, dass** sie eine wirkungsvolle Menge an n-Propylradikal-Gallizin enthält.

2. Keimtötende Zusammensetzung lebensmitteltechnischer Art gemäß des Patentanspruchs 1, **dadurch gekennzeichnet, dass** sie

   - 5 bis 70% und vorzugsweise 8 bis 60% an n-Propylradikal-Gallizin;
   - 0,05 bis 50% und vorzugsweise 0,1 bis 47% einer Monoesterfettsäure, gesättigt in $C_{10}$ oder $C_{12}$ und durch Glyzerol, und
   - in vorteilhafter Weise 5 bis 95%, vorzugsweise 7 bis 91%, eines Alkylesters aus Parahydroxybenzolsäure und insbesondere Methylparahydroxybenzoat beinhaltet.

3. Keimtötende Zusammensetzung lebensmitteltechnischer Art gemäß einem der Patentansprüche 1 und 2, **dadurch gekennzeichnet, dass** die Monoesterfettsäure, gesättigt in $C_{10}$ oder $C_{12}$ und durch Glyzerol, aus der Gruppe ausgewählt wird, die Monocaprin und Monolaurin enthält.

4. Keimtötende Zusammensetzung lebensmitteltechnischer Art gemäß einem der Patentansprüche 1 bis 3, **dadurch gekennzeichnet, dass** der Ester der Parahydroxybenzolsäure Äthylester oder n-Propylradikalester ist.

5. Keimtötende Zusammensetzung lebensmitteltechnischer Art gemäß einem der Patentansprüche 1 bis 4, **dadurch gekennzeichnet, dass** ihre Bestandteile auf eine Formel in Gestalt einer hydroalkoholischen Wasser-Ethanol-, Wasser-Isopropanol- oder Wasser-n-Propanol-Lösung gebracht werden.

**6.** Keimtötende Zusammensetzung lebensmitteltechnischer Art gemäß einem der Patentansprüche 1 bis 4, **dadurch gekennzeichnet, dass** ihre Bestandteile auf eine Formel in Gestalt einer glykolischen Lösung, vorzugsweise aus Propylenglykol, gebracht werden.

**7.** Verwendung der keimtötenden Zusammensetzung gemäß einem der Patentansprüche 1 bis 6 für die Desinfektion von Oberflächen, Schaltungen und Geräten in der Milchindustrie, in der Fleischindustrie, in der Getränkeindustrie und auf dem Bauernhof.

**8.** Verwendung der keimtötenden Zusammensetzung gemäß einem der Patentansprüche 1 bis 6 zur Verhinderung der subklinischen Euterentzündung bei Wiederkäuern, insbesondere bei Kühen, durch Anwendung am Euter vor und/oder nach dem Melken.

**9.** Verfahren zur Desinfektion, **dadurch gekennzeichnet, dass** von der keimtötenden Zusammensetzung lebensmitteltechnischer Art gemäß einem der Patentansprüche 1 bis 6 bei Raumtemperatur auf den Oberflächen der Geräte oder Einrichtungen, die zu desinfizieren sind, oder am Euter von Wiederkäuern, insbesondere bei Milchkühen, vor oder nach dem Melken durch Einweichen oder Pulverisierung/Zerstäuben Gebrauch gemacht wird.

**Claims**

**1.** Food-grade bactericidal composition based on a monoester of a $C_{10}$ or $C_{12}$ saturated fatty acid and glycerol and advantageously an alkyl ester of para-hydroxybenzoic acid, **characterized in that** it comprises an effective quantity of n-propyl gallate.

**2.** Food-grade bactericidal composition according to Claim 1, **characterized in that** it comprises:

- from 5 to 70%, and preferably from 8 to 60%, of n-propyl gallate,
- from 0.05 to 50%, and preferably from 0.1 to 47%, of a monoester of a $C_{10}$ or $C_{12}$ saturated fatty acid and glycerol, and
- advantageously from 5 to 95%, and preferably from 7 to 91%, of an alkyl ester of para-hydroxybenzoic acid, and more particularly methyl para-hydroxybenzoate.

**3.** Food-grade bactericidal composition according to either of Claims 1 and 2, **characterized in that** the monoester of a $C_{10}$ or $C_{12}$ saturated fatty acid and glycerol is chosen from the group comprising monocaprin and monolaurin.

**4.** Food-grade bactericidal composition according to one of Claims 1 to 3, **characterized in that** the ester of para-hydroxybenzoic acid is the ethyl ester or the n-propyl ester.

**5.** Food-grade bactericidal composition according to one of Claims 1 to 4, **characterized in that** its constituents are formulated in the form of an aqueous-alcoholic water-ethanol, water-isopropanol or water-n-propanol solution.

**6.** Food-grade bactericidal composition according to one of Claims 1 to 4, **characterized in that** its constituents are formulated in the form of a glycolic solution, preferably in propylene glycol.

**7.** Use of the bactericidal composition according to one of Claims 1 to 6, for the disinfection of surfaces, circuits and instruments in the dairy industry, in the meat industry, in the drinks industry and on the farm.

**8.** Use of the bactericidal composition according to one of Claims 1 to 6, for the prevention of subclinical mastitis in ruminants, in particular in cows, by application to the udder before and/or after milking.

**9.** Method of disinfection, **characterized in that** the food-grade bactericidal composition according to one of Claims 1 to 6 is used at room temperature on the surfaces of instruments or installations to be disinfected or on the udder of ruminants, in particular dairy cows, before or after milking, by immersion or spraying.